# EUROPÄISCHE PATENTSCHRIFT

(11) **EP 1 912 766 B1**
(45) Veröffentlichungstag und Bekanntmachung des Hinweises auf die Patenterteilung: **12.09.2012**
(21) Anmeldenummer: 06777955.3
(22) Anmeldetag: 25.07.2006
(51) Int. Cl.: B25F 5/02, H01M 2/10

(54) **ELEKTROGERÄT, INSBESONDERE ELEKTROHANDWERKZEUG**
ELECTRIC DEVICE, IN PARTICULAR AN ELECTRIC HAND TOOL
APPAREIL ELECTRIQUE, EN PARTICULIER OUTIL ELECTRIQUE A MAIN

(30) Priorität: 03.08.2005 DE 102005036449
(43) Veröffentlichungstag der Anmeldung: 23.04.2008
(73) Patentinhaber: ROBERT BOSCH GMBH, 70442 Stuttgart (DE)
(72) Erfinder: HOFFMANN, Erhard, 70771 Leinfelden-Echterdingen (DE); BREITENBACH, Jan, 70569 Stuttgart (DE); REJMAN, Marcin, 71332 Waiblingen (DE)
(86) Internationale Anmeldenummer: PCT/EP2006/064626
(87) Internationale Veröffentlichungsnummer: WO 2007/014877

(56) Entgegenhaltungen:
- EP-A- 1 036 636
- WO-A-00/65674
- DE-A1- 3 841 735
- DE-A1- 4 031 090
- US-A- 4 751 452
- US-A- 6 139 359

## Beschreibung

### Stand der Technik

Die Erfindung geht aus von einem Elektrogerät, insbesondere einem Elektrohandwerkzeug, nach dem Oberbegriff des Anspruchs 1.

Es ist aus der DE 38 41 735 A1 ein Elektrohandwerkzeug mit einem abnehmbaren Akkumulator und einer Halterung für diesen Akkumulator bekannt. Die Halterung ist mit zwei zu betätigenden federbelasteten Druckknopf-Sperren versehen, mittels welcher der Akkumulator in eingesetztem Zustand gesichert werden kann. Um den Akkumulator freizugeben, ist dieser mit einem Auslöse-Druckknopf versehen, wobei durch ein Drücken des Auslöse-Druckknopfs die Sperren in eine den Akkumulator freigebende Stellung gebracht werden können.

Aus WO 00/65674 ist ein elektrisches Gerät mit einem in das Gerät einschiebbaren Batteriepack bekannt. Der Verriegelungsmechanismus umfasst elastische Verriegelungslaschen am Batteriepack und einen mit den Verriegelungslaschen zusammenwirkenden Vorsprung in dem Batteriepackaufnahmefach des Geräts.

Aus US 6139359 ist ein Akku-Schrauber mit einem Schraubergehäuse und einem abnehmbaren Akkupack bekannt. Der Akkupack ist durch eine einfache Druck-Zug-Bewegung in dem Schraubergehäuse selbsttätig einrastbar und entriegelbar.

DE 4031090 A1 beschreibt eine Steckverbindung zur Befestigung eines Akkupacks an einer Handwerkzeugmaschine. Die Steckverbindung umfasst ein Steckteil am Batteriegehäuse und eine Aufnahme an der Handwerkzeugmaschine. Beide Teile weisen Rastmittel auf, die beim axialen Einstecken des Steckteils in die Aufnahme selbsttätig einrasten. Durch kurzes Drehen können die Rastmittel wieder entriegelt werden.

Aus US 4751452 ist eine batteriebetriebene Handwerkzeugmaschine bekannt, deren Akkupack vom Gehäuse der Handwerkzeugmaschine durch Drehen des Akkupacks relativ zum Gehäuse entfernbar ist.

### Vorteile der Erfindung

Die Erfindung geht aus von einem Elektrogerät, insbesondere einem Elektrohandwerkzeug, mit einer abnehmbaren Stromversorgungseinheit, einem Aufnahmebereich zur Aufnahme der Stromversorgungseinheit und einer Verriegelungseinrichtung zum Verriegeln der Stromversorgungseinheit an dem Aufnahmebereich.

Erfindungsgemäß weist der Ausnahmebereich ein Rastmittel und eine Mulde zur Aufnahme eines weiter beschriebenen Federelements auf, wobei die Mulde in Entnahmerichtung dem Rastmittel nachgeschaltet ist.

Die Verriegelungseinrichtung ist dazu vorgesehen, die Stromversorgungseinheit aus einem verriegelten Zustand - durch eine an der Stromversorgungseinheit ausgeübte und die gesamte Stromversorgungseinheit relativ zum Aufnahmebereich in Bewegung setzende Kraft - zu entriegeln. Es kann ein für einen Bediener besonders handliches Entnehmen einer an dem Aufnahmebereich verriegelten Stromversorgungseinheit erreicht werden. Außerdem kann der Einsatz einer zusätzlichen Entriegelungseinrichtung, beispielsweise zusätzlicher Betätigungselemente, eingespart werden, wodurch das Elektrogerät kompakt gebaut werden kann.

Die Verriegelungseinrichtung weist ein als Federelement ausgeführtes Verriegelungselement auf, das beim Entriegeln in einen die Stromversorgungseinheit freigebenden Zustand durch die Kraft elastisch verformt wird. Es kann vorteilhaft eine Sicherheit gegen ein von einem Bediener unerwünschtes Entriegeln erreicht werden, indem eine Energie einer an der Stromversorgungseinheit ausgeübten Kraft, z.B. das Gewicht der Stromversorgungseinheit, in eine Verformungsenergie des Federelements umgewandelt wird.

In einer weiteren Ausführungsform ist das Federelement zumindest von einer Blattfeder gebildet, die eine Rastausformung umfasst. Es können dadurch platzsparende, kostengünstige bestehende Elemente eingesetzt werden, und eine hohe Lebensdauer der Verriegelungseinrichtung kann erzielt werden. Durch die Rastausformung kann die Blattfeder, insbesondere im verriegelten Zustand, besonders sicher gehalten werden.

Eine besonders kompakte Ausgestaltung des Elektrogeräts kann dadurch erreicht werden, dass das Federelement in einem von Energiespeichereinheiten der Stromversorgungseinheit begrenzten Raum angeordnet ist. Das Federelement kann beispielsweise in von benachbarten Akkuzellen der Stromversorgungseinheit gebildeten Zwischenräumen besonders vorteilhaft angeordnet werden.

Ein besonders sicheres Halten des Federelements kann dadurch erzielt werden, dass das Federelement im verriegelten Zustand in einem Rastmittel eingerastet ist. Das Rastmittel kann beispielsweise von einer Vertiefung des Aufnahmebereichs gebildet sein, wodurch eine kompakte Bauform des Elektrogeräts erreicht werden kann.

Das Federelement wird bei einem Heranführen der Stromversorgungseinheit an den Aufnahmebereich zumindest teilweise entspannt und aus diesem entspannten Zustand vor einem Verriegeln gespannt . Das Verriegeln kann besonders effektiv durch das Spannen aus dem entspannten Zustand, insbesondere durch einen somit für den Bediener fühlbaren Widerstand, signalisiert werden. Dafür ist der Aufnahmebereich mit einer Mulde gemäß Anspruch 1 versehen, wobei das Federelement sich bei dem Heranführen in diese Mulde entspannen kann. Die Mulde bietet des Weiteren den Vorteil, dass nach einem Entriegeln das Federelement in der Mulde aufgefangen werden kann.

In einer weiteren Ausgestaltung der Erfindung wird vorgeschlagen, dass die Verriegelungseinrichtung ein Verriegelungselement und ein zusätzliches Dämpfungsmittel umfasst, das zur elastischen Aufnahme von Energie aus einer Relativbewegung zwischen der Stromversorgungseinheit und dem Aufnahmebereich vorgesehen ist. Es kann dadurch die Sicherheit gegen ein unerwünschtes Entriegeln weiter gesteigert werden.

Eine besonders einfache Ausgestaltung des Dämpfungsmittels kann dadurch erreicht werden, dass die Stromversorgungseinheit relativ zum Verriegelungselement beweglich ist und das Dämpfungsmittel zumindest von einem zur Verformung vorgesehenen Element gebildet ist, das bei einer Bewegung der Stromversorgungseinheit relativ zum Verriegelungselement verformt wird. Dadurch kann eine Bewegungsenergie durch das Dämpfungsmittel aufgenommen werden, bevor das Verriegelungselement betätigt wird.

Bei einer starken Belastung des Elektrogeräts, beispielsweise bei einem Schock, kann ein unerwünschtes Entriegeln dadurch vermieden werden, dass die Verriegelungseinrichtung ein Verriegelungselement und ein als Stoßdämpfer ausgeführtes und auf das Verriegelungselement wirkendes Dämpfungsmittel aufweist. Unter einem "Stoßdämpfer" soll in diesem Zusammenhang insbesondere ein Element verstanden werden, das die Eigenschaft aufweist, hart auf dynamische Belastungen und weich auf langsame Belastungen zu reagieren. Dafür ist der Einsatz eines thermoplastischen Elastomers, das z.B. ein viskoelastisches Material aufweist, besonders vorteilhaft.

Zusätzlich kann ein unerwünschtes Eindringen von Fremdkörpern in die Stromversorgungseinheit dadurch vermieden werden, dass durch das Dämpfungsmittel ein Innenraum der Stromversorgungseinheit nach außen isoliert ist.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Elektrohandwerkzeug mit einer abnehmbaren Stromversorgungseinheit,
- Fig. 2: eine Explosionsansicht der Stromversorgungseinheit aus Figur 1 mit einer Blattfeder und Dämpfungsmitteln,
- Fig. 3: einen Aufnahmebereich des Elektrohandwerkzeugs mit der am Aufnahmebereich verriegelten Stromversorgungseinheit aus Figur.1,
- Fig. 4a: eine Ansicht der Dämpfungsmittel und der Blattfeder aus Figur 2 von oben,
- Fig. 4b: die Dämpfungsmittel und die Blattfeder aus Figur 2 von der Seite,
- Fig. 5: den Aufnahmebereich aus Figur 3 mit einer alternativen Stromversorgungseinheit,
- Fig. 6: ein Gehäuse für das Elektrohandwerkzeug mit einem Aufnahmebereich und einer weiteren Stromversorgungseinheit,
- Fig. 7: die Stromversorgungseinheit aus Figur 6 in einer Seitenansicht,
- Fig. 8: einen Schnitt durch das Gehäuse aus Figur 6,
- Fig. 9: ein weiteres Gehäuse mit einer eingelegten Metallfeder in einer Seitenansicht,
- Fig. 10: das Gehäuse aus Figur 9 in einer perspektivischen Ansicht,
- Fig. 11: ein weiteres Gehäuse mit einem Schnapper in einer Profilansicht und
- Fig. 12: ein weiteres Gehäuse mit einem Steg in einer Profilansicht.

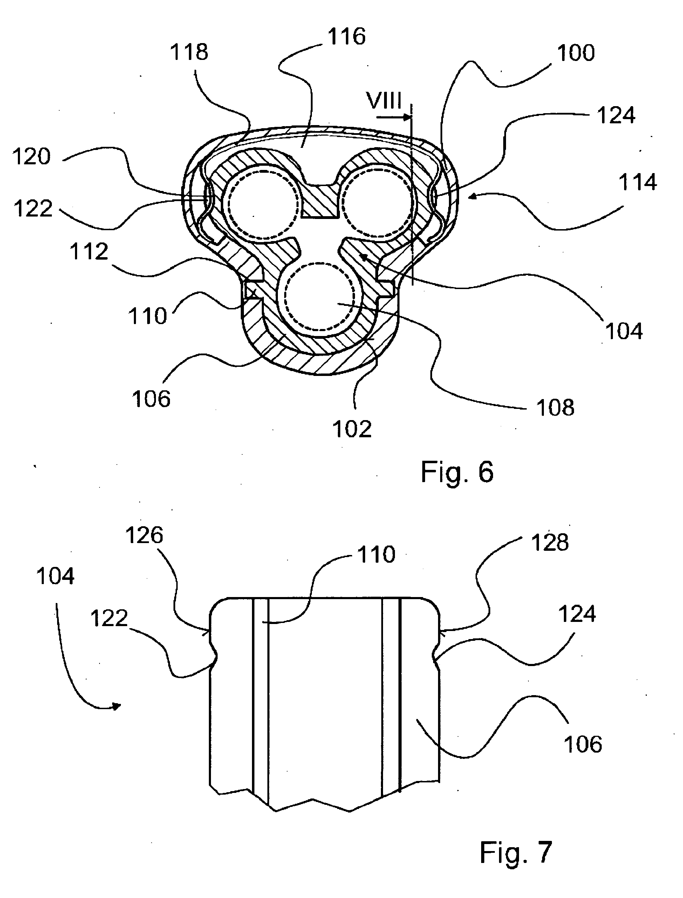

Es wird darauf hingewiesen, dass es sich bei den in Fig. 6-12 gezeigten Auführungsbeispielen nicht um einen Teil der Erfindung handelt.

### Beschreibung der Ausführungsbeispiele

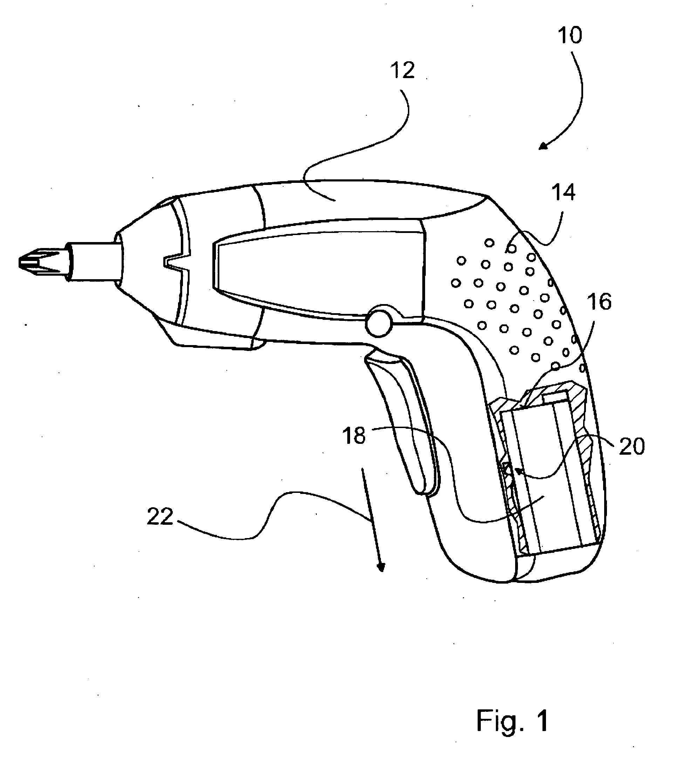

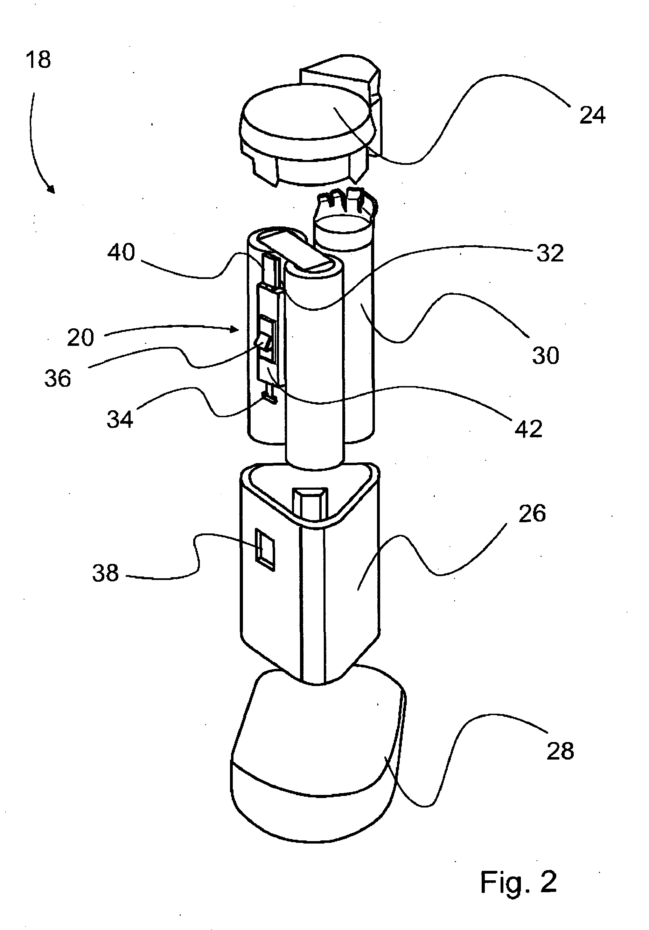

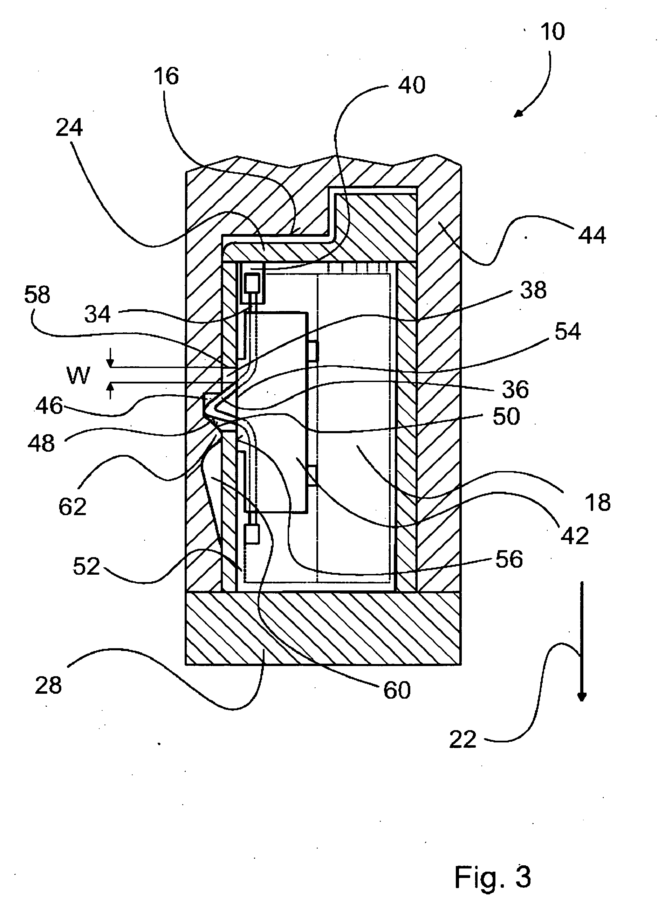

In Figur 1 ist ein als Elektrohandwerkzeug 10 ausgebildetes Elektrogerät dargestellt. Das Elektrohandwerkzeug 10 weist ein Motorgehäuse 12 und einen Handgriff 14 auf. Im Handgriff 14 sind ein Aufnahmebereich 16 zur Aufnahme einer abnehmbaren Stromversorgungseinheit 18 und eine in den Figuren 2 und 3 näher dargestellte Verriegelungseinrichtung 20 vorgesehen, die dazu dient, die Stromversorgungseinheit 18 an dem Aufnahmebereich 16 zu verriegeln. Nach einem Entriegeln kann die Stromversorgungseinheit 18 in einer Entnahmerichtung 22 herausgeführt werden.

Figur 2 zeigt die Stromversorgungseinheit 18 in einer Explosionsansicht. Diese umfasst ein oberes Teil 24, ein Akkugehäuse 26 und ein unteres Teil 28. In einem zusammengesetzten Zustand der Stromversorgungseinheit 18 sind drei als Akkuzellen ausgeführte Energiespeichereinheiten 30 innerhalb des Akkugehäuses 26 angeordnet, auf welche das obere Teil 24 aufgesteckt ist. In einem Raum 32 zwischen zwei Akkuzellen ist die Verriegelungseinrichtung 20 angeordnet, die ein als Federelement 34 ausgeführtes Verriegelungselement umfasst. Das Federelement 34 ist von einer Blattfeder gebildet und weist eine als Rastnase ausgeführte Rastausformung 36 auf, die bei zusammengesetzter Stromversorgungseinheit 18 aus einer Öffnung 38 des Akkugehäuses 26 herausragt. Des Weiteren weist die Verriegelungseinrichtung 20 ein Dämpfungsmittel 40 auf, das von einem thermoplastischen Elastomer gebildet ist. Die Verriegelungseinrichtung 20 weist ferner ein weiteres, als Stoßdämpfer ausgeführtes Dämpfungsmittel 42 auf, in welches das Federelement 34 eingebettet ist. Das Federelement 34 und das Dämpfungsmittel 42 sind relativ zum Akkugehäuse 26 beweglich.

Figur 3 zeigt den Aufnahmebereich 16, der von einer inneren Fläche eines Gehäuses 44 des Elektrohandwerkzeugs 10 gebildet ist. Die Stromversorgungseinheit 18 ist am Aufnahmebereich 16 verriegelt, wobei die Rastausformung 36 des Federelements 34 in einem als Vertiefung des Aufnahmebereichs 16 ausgeführten Rastmittel 46 eingerastet ist. Für ein sicheres Halten des Federelements 34 in dem Rastmittel 46 weist die Rastausformung 36 eine Fläche 48 auf, die mit einem stumpfen Winkel zur Entnahmerichtung 22 liegt, wodurch ein Gleiten dieser Fläche 48 auf einer Fläche 50 des Rastmittels 46 verhindert werden kann. Ein von dem Akkugehäuse 26 begrenzter Innenraum 52 ist außerdem durch das Dämpfungsmittel 42 nach außen isoliert, wobei das Dämpfungsmittel 42 ein Eindringen von Fremdkörpern über die Öffnung 38 in den Innenraum 52 verhindert. Dafür weist das Dämpfungsmittel 42 einen Vorsprung 54 auf, der an einer Seitenfläche 56 des Akkugehäuses 26 teilweise anliegt. Ferner ist das untere Teil 28 der Stromversorgungseinheit 18 im verriegelten Zustand für einen Bediener greifbar.

Um die Stromversorgungseinheit 18 von dem Aufnahmebereich 16 zu entriegeln, wird von einem Bediener eine Zugkraft an dem unteren Teil 28 in Entnahmerichtung 22 ausgeübt. Es entsteht dadurch eine Relativbewegung zwischen der Stromversorgungseinheit 18 und dem Federelement 34, das in dem Rastmittel 46 des Aufnahmebereichs 16 eingerastet verbleibt. Bei dieser Relativbewegung wird das Dämpfungsmittel 40 durch einen von dem oberen Teil 24 ausgeübten Druck verformt, insbesondere komprimiert, und eine Energie der Relativbewegung wird somit elastisch in eine Verformungsenergie des Dämpfungsmittels 40 aufgenommen. Für die Relativbewegung ist eine Wegstrecke W zwischen dem Federelement 34 und einer Kante 58 der Öffnung 38 vorgesehen. Durch ein weiteres Ziehen an dem unteren Teil 28 wird das Federelement 34, insbesondere seine Rastausformung 36, elastisch verformt und rastet aus dem Rastmittel 46 heraus. Das Dämpfungsmittel 42 reagiert bei der Verformung des Federelements 34 weich auf einen von dem Federelement 34 ausgeübten Druck und wird dadurch komprimiert. Die entriegelte Stromversorgungseinheit 18 kann anschließend durch eine weitere Zugkraft an dem unteren Teil 28 aus dem Elektrohandwerkzeug 10 entnommen werden. Beim Entriegeln kann der Bediener die Zugkraft mit einer Hand an dem unteren Teil 28 ausüben, während er mit seiner zweiten Hand das Elektrohandwerkzeug 10 hält. Die Verformung des Federelements 34 in den die Stromversorgungseinheit 18 freigebenden Zustand erfolgt durch eine Zugkraft an dem unteren Teil 28, und es werden keine zusätzlichen Betätigungselemente benötigt. Es kann dadurch ein unerwünschtes Entriegeln aufgrund eines versehentlichen Betätigens von im Handgriff 14 angeordneten Betätigungselementen vermieden werden.

Bei einer Relativbewegung zwischen der Stromversorgungseinheit 18 und dem Aufnahmebereich 16 im verriegelten Zustand, die z.B. auf starke Vibrationen des Elektrohandwerkzeugs 10 zurückzuführen ist, wird eine Energie aus dieser Bewegung in eine Verformung des Dämpfungsmittels 40 aufgenommen, bevor das Federelement 34 betätigt wird. Bei stärkeren Belastungen, z.B. bei einem Herunterfallen des Elektrohandwerkzeugs 10, kann das Federelement 34 nach dem Komprimieren des Dämpfungsmittels 40 betätigt werden, wobei es in einer kurzen Zeit einen hohen Druck auf das Dämpfungsmittel 42 ausübt. Dieses Dämpfungsmittel 42 ist von einem thermoplastischen Elastomer gebildet, und zwar besteht es aus dem Material Polyurethan RAKU-PUR 33-C 166/16-5 der Firma Rampf Giesharze. Dieses Elastomer weist ein viskoelastisches Verhalten auf und reagiert hart auf das schnelle Drücken des Federelements 34. Es setzt dem Federelement 34 einen hohen Widerstand entgegen, das dabei wenig Spielraum für eine Verformung zur Verfügung hat und aus dem Rastmittel 46 schwer herausrasten kann. Wenn bei extremen Belastungen trotz des Widerstands des Dämpfungsmittels 42 ein Herausrasten des Federelements 34 stattfindet, wird das Federelement 34 in einer Mulde 60 des Aufnahmebereichs 16 aufgefangen. Dadurch kann ein unmittelbares Herausfallen der entriegelten Stromversorgungseinheit 18 verhindert werden, da eine Bewegungsenergie in eine Verformungsenergie des Federelements 34 an einer unteren Flanke der Mulde 60 umgewandelt werden kann.

Bei einem Verriegeln der Stromversorgungseinheit 18 bietet die Mulde 60 weitere Vorteile. Ein Heranführen der Stromversorgungseinheit 18 an den Aufnahmebereich 16 wird dadurch erleichtert, dass das Federelement 34 sich in der Mulde 60 entspannt, und ein Zurückfallen der Stromversorgungseinheit 18 aus dem Elektrohandwerkzeug 10 kann verhindert werden. Um die Stromversorgungseinheit 18 zu verriegeln, wird das Federelement 34 aus diesem entspannten Zustand durch ein Gleiten an einem Steg 62 gespannt, wodurch der Bediener einen Widerstand deutlich spüren kann. Ein anschließendes Einrasten des Federelements 34 in das Rastmittel 46 aus diesem gespannten Zustand wird dadurch besonders effektiv signalisiert und kann außerdem für den Bediener deutlich hörbar sein.

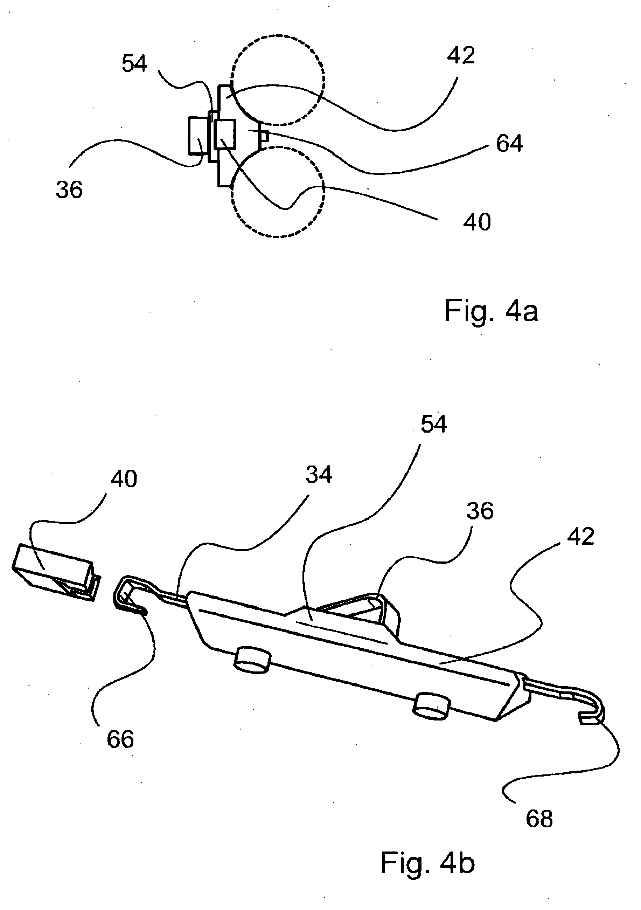

In Figur 4a sind die Dämpfungsmittel 40, 42 in einer Ansicht von oben dargestellt. Das Dämpfungsmittel 42 weist einen Abschnitt 64 auf, der an den gestrichelt dargestellten Akkuzellen anliegt. Zu erkennen ist außerdem die Rastausformung 36, die aus dem Vorsprung 54 des Dämpfungsmittels 42 herausragt.

Die Dämpfungsmittel 40, 42 und das Federelement 34 sind in der Figur 4b näher dargestellt. Das Federelement 34 ist in das Dämpfungsmittel 42 eingebettet, und seine Rastausförmung 36 ragt aus dem Vorsprung 54 heraus. Es umfasst außerdem zwei Ösen 66 und 68. An die Öse 66 kann das in der Figur von dem Federelement 34 getrennt dargestellte Dämpfungsmittel 40 angesteckt oder in einer anderen, die Montage erleichternden Ausführungsform angespritzt werden.

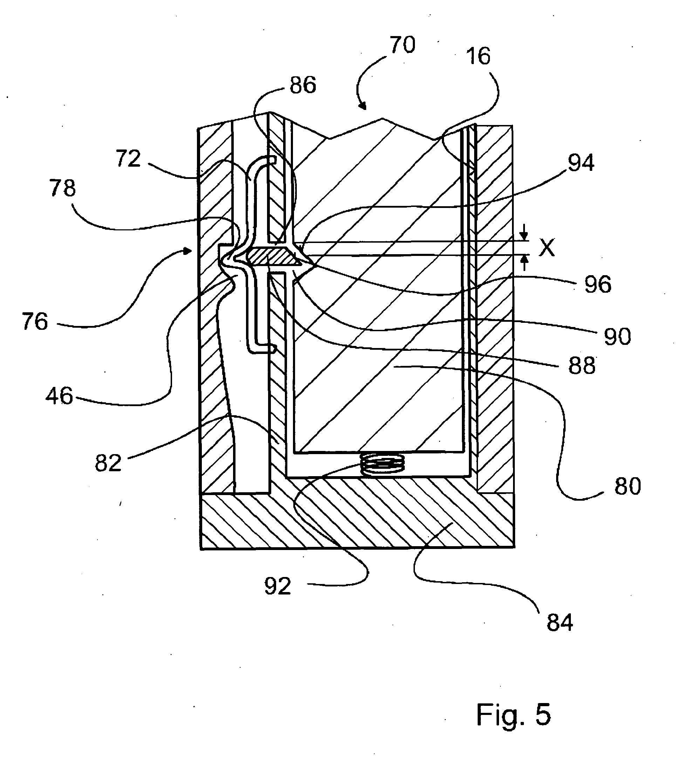

In Figur 5 ist der Aufnahmebereich 16 dargestellt, an dem eine weitere Stromversorgungseinheit 70 verriegelt ist. An der Stromversorgungseinheit 70 ist ein als Federelement 72 ausgebildetes Verriegelungselement einer Verriegelungseinrichtung 76 befestigt. Dieses umfasst eine als Rastnase ausgeführte Rastausformung 78, die in dem Rastmittel 46 eingerastet ist. Die Stromversorgungseinheit 70 weist eine Batterieeinheit 80, ein Akkugehäuse 82 und ein unteres Teil 84 auf. Das Akkugehäuse 82 umfasst eine Öffnung 86, in der ein Bolzen 88 angeordnet ist. Zu einer Bewegung des Bolzens 88 in der Öffnung 86 ist eine Ausnehmung 90 in der Batterieeinheit 80 vorgesehen. Zwischen der Batterieeinheit 80, die relativ zum Akkugehäuse 82 beweglich ist, und dem Akkugehäuse 82 ist eine Feder 92 angeordnet.

Um die Stromversorgungseinheit 70 zu entriegeln, wird eine Zugkraft an dem unteren Teil 84 von einem Bediener ausgeübt. Durch diese Kraft wird die Rastausformung 78 des Federelements 72 verformt, welches den Bolzen 88 in die Öffnung 86 hineindrückt. Die Rastausformung 78 kann sich dadurch weiter verformen, bis diese aus dem Rastmittel 46 herausrastet. Die Stromversorgungseinheit 70 ist somit freigegeben und kann durch ein weiteres Ziehen an dem unteren Teil 84 aus dem Elektrohandwerkzeug 10 entnommen werden. Bei einer Belastung, beispielsweise einem Herunterfallen des Elektrohandwerkzeugs 10, die zu einem unerwünschten Entriegeln der Stromversorgungseinheit 70 tendiert, entsteht eine Relativbewegung zwischen der Batterieeinheit 80 und dem Akkugehäuse 82, da die Batterieeinheit 80 eine größere Trägheit als das Akkugehäuse 82 aufweist. Die Feder 92 wird dadurch zusammengedrückt. Wenn die Batterieeinheit 80 sich um einen Federweg X bewegt hat, liegt eine Seitenfläche 94 der Ausnehmung 90 der Batterieeinheit 80 an einer schrägen Seitenfläche 96 des Bolzens 88 an. Eine Verformung des Federelements 72 kann in dieser Position der Batterieeinheit 80 verhindert werden, da ein Hineindrücken des Bolzens 88 in die Öffnung 86 durch dessen Anliegen an der Seitenfläche 94 behindert ist. Alternativ kann eine Verformung des Federelements 72 bei einer Belastung des Elektrohandwerkzeugs 10 mittels eines von der Stromversorgungseinheit 70 separaten Gewichts verhindert werden, das relativ zum Aufnahmebereich 16 bewegbar gelagert ist. Bei der Belastung, die zu einer Entriegelung der Stromversorgungseinheit 70 tendiert, entsteht eine Bewegung des Gewichts relativ zum Aufnahmebereich 16, bis das Gewicht an einem Sperrelement anliegt, der, wie der Bolzen 88 aus Figur 5, eine Verformung des Federelements 72 verhindert.

Es wird darauf hingewiesen, dass es sich bei den in Fig. 6-12 gezeigten Ausführungsbeispielen nicht um einen Teil der Erfindung handelt.

In Figur 6 ist ein weiteres Gehäuse 100 des Elektrohandwerkzeugs 10 dargestellt. Eine innere Fläche des Gehäuses 100 bildet einen Aufnahmebereich 102, an dem eine Stromversorgungseinheit 104 verriegelt ist. Von dieser ist ein Akkugehäuse 106 mit zwei Führungsleisten 110 zur Führung der Stromversorgungseinheit 104 zu erkennen. Das Akkugehäuse 106 umschließt drei Akkuzellen 108. Die Führungsleisten 110 greifen bei einem Heranführen an den Aufnahmebereich 102 in entsprechende Führungsnuten 112 des Aufnahmebereichs 102 ein. Es ist außerdem eine Verriegelungseinrichtung 114 dargestellt, die ein als Drahtfeder ausgeführtes und in eine Nut 116 eingelegtes Federelement 118 aufweist. An zwei einander gegenüberliegenden Stellen ragt das Federelement 118 in Form von zwei Rastausformungen 120 aus dem Gehäuse 100 heraus. Bei einem Verriegeln der Stromversorgungseinheit 104 an dem Aufnahmebereich 102 rasten diese Rastausformungen 120 in als Vertiefungen ausgeführte Rastmittel 122, 124 der Stromversorgungseinheit 104 ein.

Die Stromversorgungseinheit 104 ist in einer Seitenansicht in Figur 7 dargestellt. Zu erkennen ist das Akkugehäuse 106 mit den Führungsleisten 110. Zwei einander gegenüberliegende Seitenflächen 126, 128 des Akkugehäuses 106 weisen die Rastmittel 122, 124 auf, die jeweils zu einem Einrasten eines geräteseitigen Federelements bei einem Verriegeln an dem Aufnahmebereich 102 vorgesehen sind.

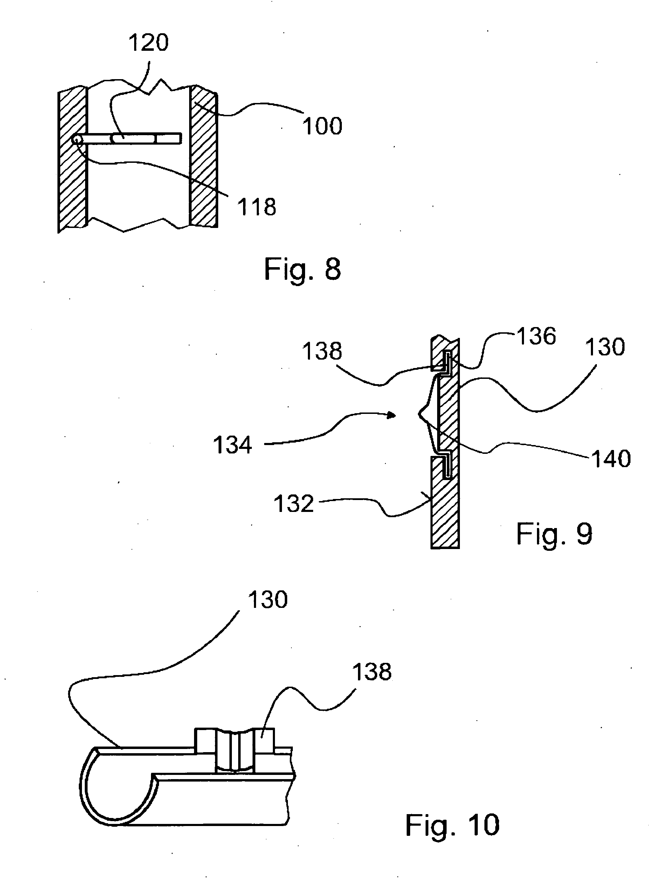

Figur 8 zeigt einen Schnitt durch das Gehäuse 100. Zu erkennen ist das in das Gehäuse 100 eingelegte Federelement 118 mit der herausragenden Rastausformung 120.

In Figur 9 ist eine Ausführung eines weiteren Gehäuses 130 des Elektrohandwerkzeugs 10 gezeigt. Das Gehäuse 130 bildet einen Aufnahmebereich 132 zur Aufnahme der Stromversorgungseinheit 104. Es ist eine Verriegelungseinrichtung 134 dargestellt, die ein als Metallfeder ausgeführtes und in eine Ausnehmung 136 eingestecktes Federelement 138 aufweist. Es umfasst eine Rastausformung 140, die aus der Ausnehmung 136 herausragt und im verriegelten Zustand der Stromversorgungseinheit 104 in dem Rastmittel 122 der Stromversorgungseinheit 104 eingerastet ist. Das Gehäuse 130 mit dem eingelegten Federelement 138 ist in einer perspektivischen Ansicht in Figur 10 dargestellt.

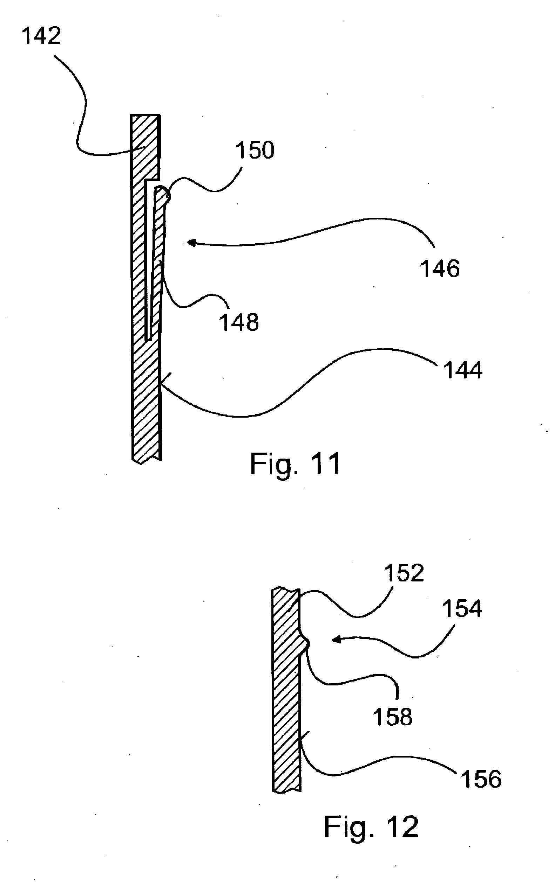

Eine weitere Ausführungsform eines Gehäuses 142 des Elektrohandwerkzeugs 10 ist in Figur 11 gezeigt. Das Gehäuse 142 bildet einen Aufnahmebereich 144 zur Aufnahme der Stromversorgungseinheit 104. Es ist eine Verriegelungseinrichtung 146 dargestellt, die ein Federelement 148 umfasst. Das Federelement 148 ist einstückig an das Gehäuse 142 angeformt, und zwar in Form eines Schnappers mit einer Rastausformung 150, die im verriegelten Zustand der Stromversorgungseinheit 104 in das Rastmittel 122 eingerastet ist.

In dem in Figur 12 dargestellten Ausführungsbeispiel ist ein Federelement 152 einer Verriegelungseinrichtung 154 von einem zur Verformung vorgesehen Gehäuse für das Elektrohandwerkzeug 10 gebildet. Das Gehäuse, das einen Aufnahmebereich 156 zur Aufnahme der Stromversorgungseinheit 104 bildet, weist eine als Steg ausgeführte Rastausformung 158 auf, die bei einem Verriegeln der Stromversorgungseinheit 104 in das Rastmittel 122 einrastet.

### Bezugszeichen

- 10: Elektrohandwerkzeug
- 12: Motorgehäuse
- 14: Handgriff
- 16: Aufnahmebereich
- 18: Stromversorgungseinheit
- 20: Verriegelungseinrichtung
- 22: Entnahmerichtung
- 24: oberes Teil
- 26: Akkugehäuse
- 28: unteres Teil
- 30: Energiespeichereinheit
- 32: Raum
- 34: Federelement
- 36: Rastausformung
- 38: Öffnung
- 40: Dämpfungsmittel
- 42: Dämpfungsmittel
- 44: Gehäuse
- 46: Rastmittel
- 48: Fläche
- 50: Fläche
- 52: Innenraum
- 54: Vorsprung
- 56: Seitenfläche
- 58: Kante
- 60: Mulde
- 62: Steg
- 64: Abschnitt
- 66: Öse
- 68: Öse
- 70: Stromversorgungseinheit
- 72: Federelement
- 76: Verriegelungseinrichtung
- 78: Rastausformung
- 80: Batterieeinheit
- 82: Akkugehäuse
- 84: unteres Teil
- 86: Öffnung
- 88: Bolzen
- 90: Ausnehmung
- 92: Feder
- 94: Seitenfläche
- 96: Seitenfläche
- 100: Gehäuse
- 102: Aufnahmebereich
- 104: Stromversorgungseinheit
- 106: Akkugehäuse
- 108: Akkuzelle
- 110: Führungsleiste
- 112: Führungsnut
- 114: Verriegelungseinrichtung
- 116: Nut
- 118: Federelement
- 120: Rastausformung
- 122: Rastmittel
- 124: Rastmittel
- 126: Seitenfläche
- 128: Seitenfläche
- 130: Gehäuse
- 132: Aufnahmebereich
- 134: Verriegelungseinrichtung
- 136: Ausnehmung
- 138: Federelement
- 140: Rastausformung
- 142: Gehäuse
- 144: Aufnahmebereich
- 146: Verriegelungseinrichtung
- 148: Federelement
- 150: Rastausformung
- 152: Federelement
- 154: Verriegelungseinrichtung
- 156: Aufnahmebereich
- 158: Rastausformung
- W: Wegstrecke
- X: Federweg

## Patentansprüche

1. Elektrogerät, insbesondere Elektrohandwerkzeug, mit einer abnehmbaren Stromversorgungseinheit (18, 70), einem Aufnahmebereich (16) zur Aufnahme der Stromversorgungseinheit (18, 70) und einer Verriegelungseinrichtung (20, 76) um Verriegeln der Stromversorgungseinheit (18, 70) an dem Aufnahmebereich (16), wobei die Verriegelungseinrichtung (20, 76) dazu vorgesehen ist, die Stromversorgungseinheit (18, 70, ) aus einem verriegelten Zustand - durch eine an der Stromversorgungseinheit (18, 70) ausgeübte und die gesamte Stromversorgungseinheit (18, 70) relativ zum Aufnahmebereich (16) in Bewegung setzende Kraft - zu entriegeln, und die Verriegelungseinrichtung (20, 76) ein als Federelement (34, 72) ausgeführtes Verriegelungselement aufweist, das beim Entriegeln in einen die Stromversorgungseinheit (18, 70) freigebenden Zustand durch die Kraft elastisch verformt wird, **dadurch gekennzeichnet, dass** der Aufnahmebereich (16) ein Rastmittel (46) und eine Mulde (60) zur Aufnahme des Federelements (34) aufweist, wobei die Mulde (60) in Entnahmerichtung (22) dem Rastmittel (46) nachgeschaltet ist.

2. Elektrogerät nach Anspruch 1, **dadurch gekennzeichnet, dass** das Federelement (34) zumindest von einer Blattfeder gebildet ist, die eine Rastausformung (36) umfasst.

3. Elektrogerät nach Anspruch 1 oder 2, **dadurch gekennzeichnet, dass** das Federelement (34) in einem von Energiespeichereinheiten (30) der Stromversorgungseinheit (18) begrenzten Raum (32) angeordnet ist, welcher durch einen von benachbarten Energiespeichereinheiten gebildeten Zwischenraum gebildet wird.

4. Elektrogerät nach einem der Ansprüche 1 bis 3, **dadurch gekennzeichnet, dass** das Federelement (34, 72) im verriegeiten Zustand in einem Rastmittel (46 ) eingerastet ist.

5. Elektrogerät nach einem der Ansprüche 1 bis 4, **dadurch gekennzeichnet, dass** das Federelement (34, 72) derart ausgebildet ist, dass bei einem Heranführen der Stromversorgungseinheit (18, 70) an den Aufnahmebereich (16) zumindest teilweise entspannt wird und aus diesem entspannten Zustand vor einem Verriegeln gespannt wird.

6. Elektrogerät nach einem der vorhergehenden Ansprüche, **dadurch gekennzeichnet, dass** die Verriegelungseinrichtung (20) ein Verriegelungselement und ein zusätzliches Dämpfungsmittel (40) umfasst, das zur elastischen Aufnahme von Energie aus einer Relätivbewegung zwischen der Stromversorgungseinheit (18) und dem Aufnahmebereich (16) vorgesehen ist

7. Elektrogerät nach Anspruch 6, **dadurch gekennzeichnet, dass** die Stromversorgungseinheit (18) relativ zum Verriegelungselement beweglich ist und das Dämpfungsmittel (40) zumindest von einem zur Verformung vorgesehenen Element gebildet ist, das bei einer Bewegung der Stromversorgungseinheit (18) relativ zum Verriegelungselement verformt wird.

8. Elektrogerät nach einem der vorhergehenden Ansprüche, **dadurch gekennzeichnet, dass** die Verriegelungseinrichtung (20) ein Verriegelungselement und ein als Stoßdämpfer ausgeführtes und auf das Verriegelungselement wirkendes Dämpfungsmittel (42) aufweist.

9. Elektrogerät nach einem der Ansprüche 7 oder 8, **dadurch gekennzeichnet, dass** durch das Dämpfungsmittel (42) ein Innenraum (52) der Stromversorgungseinheit (18) nach außen isoliert ist.

## Claims

1. Electric appliance, in particular handheld power tool, having a removable power supply unit (18, 70), an accommodation region (16) for accommodating the power supply unit (18, 70), and a locking device (20, 76) for locking the power supply unit (18, 70) to the accommodation region (16), with the locking device (20, 76) being provided for the purpose of unlocking the power supply unit (18, 70) from a locked state - by virtue of a force which is exerted on the power supply unit (18, 70) and causes the entire power supply unit (18, 70) to move relative to the accommodation region (16), and the locking device (20, 76) having a locking element which is designed as a spring element (34, 72) and is elastically deformed by the force during unlocking into a state in which the power supply unit (18, 70) is released, **characterized in that** the accommodation region (16) has a latching means (46) and a hollow (60) for accommodating the spring element (34), with the hollow (60) being arranged downstream of the latching means (46) in the removal direction (22).

2. Electric appliance according to Claim 1, **characterized in that** the spring element (34) is formed at least by a leaf spring which comprises a shaped latching portion (36).

3. Electric appliance according to Claim 1 or 2, **characterized in that** the spring element (34) is arranged in an area (32) which is delimited by energy storage units (30) of the power supply unit (18) and which is formed by an intermediate space which is formed by adjacent energy storage units.

4. Electric appliance according to one of Claims 1 to 3, **characterized in that** the spring element (34, 72) is latched into a latching means (46) in the locked state.

5. Electric appliance according to one of Claims 1 to 4, **characterized in that** the spring element (34, 72) is formed in such a way that it is at least partially relieved of tension when the power supply unit (18, 70) is led to the accommodation region (16) and is tensioned out of this relieved state before a locking operation.

6. Electric appliance according to one of the preceding claims, **characterized in that** the locking device (20) comprises a locking element and an additional damping means (40) which is provided for the purpose of elastically absorbing energy from a relative movement between the power supply unit (18) and the accommodation region (16).

7. Electric appliance according to Claim 6, **characterized in that** the power supply unit (18) can move relative to the locking element, and the damping means (40) is formed at least by an element which is intended to deform and is deformed when the power supply unit (18) moves relative to the locking element.

8. Electric appliance according to one of the preceding claims, **characterized in that** the locking device (20) has a locking element and a damping means (42) which is designed as an impact damper and acts on the locking element.

9. Electric appliance according to either of Claims 7 and 8, **characterized in that** an interior space (52) in the power supply unit (18) is insulated from the outside by the damping means (42).

## Revendications

1. Appareil électrique, en particulier outil électrique à main, comprenant une unité d'alimentation en courant (18, 70) pouvant être coupée, une région de réception (16) pour recevoir l'unité d'alimentation en courant (18, 70) et un dispositif de verrouillage (20, 76) pour verrouiller l'unité d'alimentation en courant (18, 70) sur la région de réception (16), le dispositif de verrouillage (20, 76) étant prévu pour déverrouiller l'unité d'alimentation en courant (18, 70) à partir d'un état verrouillé - par une force exercée sur l'unité d'alimentation en courant (18, 70) et mettant en mouvement l'ensemble de l'unité d'alimentation en courant (18, 70) par rapport à la région de réception (16), et le dispositif de verrouillage (20, 76) présentant un élément de verrouillage réalisé sous forme d'élément de ressort (34, 72), qui, lors du déverrouillage dans un état libérant l'unité d'alimentation en courant (18, 70), est déformé élastiquement par la force, **caractérisé en ce que** la région de réception (16) présente un moyen d'encliquetage (46) et un creux (60) pour recevoir l'élément de ressort (34), le creux (60) étant monté à la suite du moyen d'encliquetage (46) dans la direction d'enlèvement (22).

2. Appareil électrique selon la revendication 1, **caractérisé en ce que** l'élément de ressort (34) est formé au moins par un ressort à lame qui comprend une formation d'encliquetage (36).

3. Appareil électrique selon la revendication 1 ou 2, **caractérisé en ce que** l'élément de ressort (34) est disposé dans un espace (32) limité par des unités d'accumulation d'énergie (30) de l'unité d'alimentation en courant (18), ledit espace étant formé par un espace intermédiaire formé par des unités d'accumulation d'énergie adjacentes.

4. Appareil électrique selon l'une quelconque des revendications 1 à 3, **caractérisé en ce que** l'élément de ressort (34, 72) est encliqueté dans l'état verrouillé dans un moyen d'encliquetage (46).

5. Appareil électrique selon l'une quelconque des revendications 1 à 4, **caractérisé en ce que** l'élément de ressort (34, 72) est réalisé de telle sorte que dans le cas d'un rapprochement de l'unité d'alimentation en courant (18, 70) de la région de réception (16), il soit au moins en partie détendu et qu'il soit serré hors de cet état détendu avant un verrouillage.

6. Appareil électrique selon l'une quelconque des revendications précédentes, **caractérisé en ce que** le dispositif de verrouillage (20) comprend un élément de verrouillage et un moyen d'amortissement supplémentaire (40), qui est prévu pour recevoir élastiquement de l'énergie provenant d'un mouvement relatif entre l'unité d'alimentation en courant (18) et la région de réception (16).

7. Appareil électrique selon la revendication 6, **caractérisé en ce que** l'unité d'alimentation en courant (18) est déplaçable par rapport à l'élément de verrouillage et le moyen d'amortissement (40) est formé au moins par un élément prévu pour être déformé, qui est déformé lors d'un déplacement de l'unité d'alimentation en courant (18) par rapport à l'élément de verrouillage.

8. Appareil électrique selon l'une quelconque des revendications précédentes, **caractérisé en ce que** le dispositif de verrouillage (20) présente un élément de verrouillage et un moyen d'amortissement (42) réalisé sous forme d'amortisseur des chocs et agissant sur l'élément de verrouillage.

9. Appareil électrique selon l'une quelconque des revendications 7 ou 8, **caractérisé en ce qu'**un espace interne (52) de l'unité d'alimentation en courant (18) est isolé vers l'extérieur par le moyen d'amortissement (42).
